# EUROPÄISCHE PATENTSCHRIFT

(11) **EP 3 063 839 B1**
(45) Veröffentlichungstag und Bekanntmachung des Hinweises auf die Patenterteilung: **06.12.2017**
(21) Anmeldenummer: 14814738.2
(22) Anmeldetag: 14.10.2014
(51) Int. Cl.: B60L 1/00, B60L 3/00, B60L 11/18, H01R 13/627, H01R 13/639

(54) **ELEKTRISCHE STECKVERBINDUNG FÜR INSBESONDERE ELEKTROFAHRZEUGE**
ELECTRIC PLUG-IN CONNECTION, IN PARTICULAR FOR ELECTRIC VEHICLES
LIAISON PAR ENFICHAGE ÉLECTRIQUE, EN PARTICULIER POUR DES VÉHICULES ÉLECTRIQUES

(30) Priorität: 28.10.2013 DE 102013017842
(43) Veröffentlichungstag der Anmeldung: 07.09.2016
(73) Patentinhaber: Kiekert AG, 42579 Heiligenhaus (DE)
(72) Erfinder: ERICES, Bernado, 51429 Bergisch-Gladbach (DE)
(86) Internationale Anmeldenummer: PCT/DE2014/100362
(87) Internationale Veröffentlichungsnummer: WO 2015/062582

(56) Entgegenhaltungen:
- WO-A1-2013/047322
- CN-A- 102 668 264
- DE-A1-102011 050 783
- DE-T2- 69 411 485
- JP-A- H06 310 208
- US-A1- 2013 255 333

## Beschreibung

Die Erfindung betrifft eine elektrische Steckverbindung für insbesondere Elektrofahrzeuge gemäß dem Oberbegriff des Anspruchs 1.

Elektrofahrzeuge bezeichnen allgemein Verkehrsmittel, die mit elektrischer Energie angetrieben werden. Hierbei kann es sich um Schienenfahrzeuge, Straßenfahrzeuge, Wasserfahrzeuge oder sogar Luftfahrzeuge handeln. Das Mobilitätsverhalten der Menschen im Umgang mit solchen Elektrofahrzeugen wird größtenteils im Rahmen der sogenannten Elektromobilität beschrieben und untersucht.

Da Elektrofahrzeuge typischerweise mit einer Vielzahl an Akkumulatoren zur elektrischen Energieversorgung ausgerüstet sind, kommt dem Nachladen an sogenannten Stromtankstellen eine besondere Bedeutung zu. Solche Stromtankstellen können öffentlich oder auch nicht öffentlich zugänglich sein und sind im einfachsten Fall als Steckdose ausgebildet. Mit Hilfe der Steckdose wird der Akkumulator des betreffenden Elektrofahrzeuges über eine Kabelverbindung aufgeladen. Da der Ladevorgang regelmäßig mehrere Stunden dauert und meistens kostenpflichtig ist, sind Maßnahmen zur Sicherung bzw. Verriegelung des Steckverbinders erforderlich.

Denn ansonsten besteht die Gefahr, dass beim Aufladen des Akkumulators beim abgestellten Elektrofahrzeug Unberechtigte den Stecker aus der Steckdose ziehen und dadurch der Ladevorgang unterbrochen wird. Als Folge hiervon ist nicht nur die Aufladung des Akkumulators bzw. der mehreren Akkumulatoren unvollständig, sondern besteht darüber hinaus noch die Gefahr, dass seitens der unbefugten Person elektrischer Strom ohne zu zahlen abgezapft wird.

Zu diesem Zweck befasst sich eine elektrische Steckverbindung für insbesondere Elektrofahrzeuge gemäß DE 10 2009 057 426 A1 mit einem speziellen Aktuator zum Betätigen des Sperrelementes. Tatsächlich ist der Aktuator oder ein Gehäuse des Aktuators zum Verbinden mit einem der Teile des Steckverbinders ausgebildet, also entweder zum Verbinden mit der Steckdose oder dem Stecker. Auf diese Weise soll eine einfach zu montierende Verriegelungseinheit zur Verfügung gestellt werden. Außerdem wird eine einfache Handhabung beim Austausch der Verriegelungseinheit gegen eine andere Verriegelungseinheit propagiert. Das hat sich grundsätzlich bewährt.

Bei der bekannten Lehre ist das Übertragungselement zwischen dem Aktuator und dem endseitig angeordneten Sperrelement als Betätigungszug ausgebildet. Außerdem ist das fragliche Übertragungselement an seinem einen Ende mit einem Halter für das Sperrmittel bzw. Sperrelement verbunden, in welchem das Sperrmittel bzw. Sperrelement verschiebbar aufgenommen wird. Der Halter verfügt üblicherweise über einen Flanschabschnitt zum Ankoppeln an die Steckdose. - Eine solche Ausführungsform ist montage- und herstellungstechnisch schon deshalb aufwendig, weil der Halter und insbesondere das Übertragungselement sowie das endseitig angeordnete Sperrelement getrennt voneinander ausgelegt sind und montiert werden müssen. Berücksichtigt man, dass das Sperrelement typischerweise als Verriegelungszapfen ausgelegt ist, so können letztlich auch Funktionsstörungen nicht mit letzter Sicherheit ausgeschlossen werden. Hier will die Erfindung insgesamt Abhilfe schaffen.

WO 2013 047 322 A1 beschreibt eine elektrische Steckverbindung gemäß dem Oberbegriff des Anspruchs 1. Bei dieser bekannten Steckverbindung ist der Aktuator ein Motor, auf dessen Abtriebswelle eine Schnecke sitzt, umfasst die Getriebeanordnung ein Schneckenrad, ein Antriebszahnrad und ein Sektorzahnrad, und ist das Sperrelement ein Schwenkhebel, der um eine Schwenkachse schwenkbar ist. Das Schneckenrad kämmt mit der Schnecke und ist konzentrisch an dem Antriebszahnrad befestigt. Das Sektorzahnrad kämmt mit dem Antriebszahnrad und ist an dem Schwenkhebel befestigt.

DE 694 11 485 T2 beschreibt eine Koppelvorrichtung eines Aufladeverbindungssatzes für ein Elektrofahrzeug. Diese bekannte Koppelvorrichtung umfasst einen pistolenartigen Körper mit einem Griff und einem Betätigungshebel, ein Paar Koppelplatten, ein Paar Zahnräder und ein Paar Zwischenzahnräder. Der Betätigungshebel ist schwenkbar mit dem Griff verbunden. Die Koppelplatten können entlang einer Führung nach vorne und hinten gleiten. Jede Koppelplatte ist auf einer oberen Fläche ihres hinteren Endes mit einer Zahnstange versehen, die mit einem der Zahnräder kämmt. Jedes Zahnrad kämmt über je eines der Zwischenzahnräder mit einem auf einem Ende des Hebels vorgesehenen drehbaren, gebogenen Zahnsegment.

Vor diesem Hintergrund schlägt die Erfindung den Gegenstand des unabhängigen Anspruchs vor. Vorteilhafte Ausführungsformen der Erfindung sind in den abhängigen Ansprüchen beschrieben. Es kommt ein Umlenkgetriebe zum Einsatz, mit dessen Hilfe Stellbewegungen des Aktuators in korrespondierende Stellbewegungen des Sperrelementes mit anderer Richtung umgewandelt werden.

Bei dem Aktuator handelt es sich um ein Linear-Stellelement, so dass der Antriebszapfen ausgangsseitig des Aktuators entsprechende Stellbewegung in Linearrichtung bzw. in seiner Längserstreckung vollführt. Die Stellbewegungen des Antriebszapfens werden auf das Übertragungselement bzw. die an dieser Stelle erfindungsgemäß vorgesehene Getriebeanordnung übertragen und hier typischerweise umgelenkt.

Dabei hat es sich bewährt, wenn der Antriebszapfen und das Stellelement winklig, insbesondere rechtwinklig, zueinander angeordnet sind. Dadurch können lineare Stellbewegungen des Antriebszapfens in korrespondierende Stellbewegungen des Stellelementes rechtwinklig hierzu umgewandelt werden. Das alles gelingt unter Berücksichtigung eines kompakten Aufbaus, weil im Unterschied zum aus DE 10 2009 057 426 A1 bekannten Stand der Technik etwaige Biegeradien von flexiblen Kabeln als Übertragungselement in diesem Kontext keine Rolle spielen.

Hinzu kommt, dass im Rahmen der Erfindung die zusätzliche Möglichkeit besteht, für eine Untersetzung respektive Übersetzung der linearen Stellbewegung des Antriebszapfens bei der Beaufschlagung des Verriegelungszapfens sorgen zu können. Dadurch kann beispielsweise auch mit einem kleinbauenden Aktuator gearbeitet werden, der nur einen geringen Stellweg des Antriebszapfens zur Verfügung stellt. Gleichwohl lässt sich dieser geringe Stellweg des Antriebszapfens mit Hilfe der erfindungsgemäßen Getriebeanordnung übersetzen, so dass das Stellelement ausreichende Stellbewegungen ausgangsseitig vollführt. So oder so wird die Getriebeanordnung von dem fraglichen Antriebszapfen des Aktuators beaufschlagt. Es wechselwirkt das Stellelement mit einem Gegenelement an dem Steckverbinder. Bei dem Gegenelement handelt es sich meistens um eine Ausnehmung, in welche das Stellelement als Verriegelungszapfen eingreift, um die Verriegelungseinheit in ihre Funktionsstellung "verriegelt" zu überführen. Der demgegenüber "entriegelte" Zustand korrespondiert dazu, dass der Verriegelungszapfen aus der fraglichen Ausnehmung auftaucht und diese freigibt. Meistens findet sich die Ausnehmung am Stecker und wird die Verriegelung dann vorgenommen, wenn der Stecker vollständig in die Steckdose eingesteckt ist.

Dabei liegt es im Rahmen der Erfindung, für eine automatische Verriegelung zu sorgen. Zu diesem Zweck mag der (vollständig) in die Steckdose eingesteckte Stecker einen entsprechenden Kontakt, einen Schalter oder einen sonst wie gearteten Sensor beaufschlagen, welcher seinerseits für die Ansteuerung des Aktuators sorgt. Als Folge hiervon überführt der Aktuator das Stellelement bzw. die Verriegelungseinheit insgesamt von ihrer zuvor eingenommenen Position "entriegelt" in die Stellung "verriegelt", indem das Stellelement in die Ausnehmung des Steckers eingreift. Dazu ist das Stellelement im Regelfall an die Steckdose angeschlossen.

Um demgegenüber die Position "entriegelt" der Verriegelungseinheit darstellen zu können, kann ein Bediener einen Schalter beaufschlagen, um den Aktuator in Gegenrichtung anzusteuern. Als Folge wird das Stellelement bzw. der Verriegelungszapfen aus der Ausnehmung zurückgezogen. Es ist aber auch möglich, dass die Position "entriegelt" per Federkraft eingenommen wird. Das kann sogar automatisch beispielsweise dann geschehen, wenn der oder die Akkumulatoren des Elektrofahrzeuges vollständig aufgeladen sind. Eine solche Vorgehensweise wird man jedoch meistens daran koppeln oder koppeln müssen, dass zugleich ein Ladestrom abgestellt wird, um ein unbefugtes Stromabzapfen zu verhindern. Aus diesem Grund muss die Entriegelung typischerweise manuell von dem Benutzer durch Betätigen eines Schalters vorgenommen werden, mit dessen Hilfe der Aktuator in Gegenrichtung beaufschlagt wird respektive jedenfalls dafür gesorgt wird, dass der Verriegelungszapfen aus der Ausnehmung des Steckers herausgezogen wird, so dass der Stecker im Innern der Steckdose freikommt und aus dieser entfernt werden kann.

Eine besonders kompakte und funktionsgerechte Ausführungsform ist dadurch gekennzeichnet, dass der Antriebszapfen und/oder der Verriegelungszapfen mit (jeweils) einem Zahnstangenabschnitt ausgerüstet sind. Da der Antriebszapfen und das Stellelement bzw. der Verriegelungszapfen typischerweise winklig und insbesondere rechtwinklig, zueinander angeordnet sind, lassen sich der Antriebszapfen und das Stellelement bzw. der Verriegelungszapfen antriebstechnisch besonders einfach koppeln. Denn es besteht die Möglichkeit, dass der Antriebszapfen und das Stellelement durch wenigstens ein Zahnrad antriebstechnisch miteinander verbunden werden.

Dabei ist die Auslegung meistens so getroffen, dass das Zahnrad sowohl mit dem Antriebszapfen als auch dem Stellelement respektive den jeweiligen Zahnstangenabschnitten in Eingriff ist. Sobald also der Antriebszapfen von dem Aktuator in seiner Längsrichtung beaufschlagt wird, sorgt dies für eine Drehbewegung des Zahnrades, die dann ihrerseits über den mit dem Zahnrad kämmenden Zahnstangenabschnitt des Stellelementes für eine entsprechende Stellbewegung des Stellelementes bzw. Verriegelungszapfens sorgt.

Die Getriebeanordnung kann vorteilhaft in einem Gehäuse angeordnet werden. Dabei hat es sich bewährt, wenn sich das Gehäuse aus einem Lagerteil und einem Abdeckteil zusammensetzt. Das Lagerteil dient typischerweise zur Aufnahme und Lagerung des Antriebszapfens und des Verriegelungszapfens sowie des beide Zapfen antriebstechnisch miteinander koppelnden Zahnrades. Demgegenüber übernimmt das Abdeckteil überwiegend dichtende Wirkung. Diese wird noch dadurch gesteigert, dass wenigstens eine Dichtung zwischen beiden Gehäuseteilen vorgesehen ist.

An dieser Stelle hat es sich bewährt, wenn zumindest ein Gehäuseteil und die wenigstens eine Dichtung ein Zweikomponenten-Bauteil aus Kunststoff definieren. So werden typischerweise das Lagerteil und das Abdeckteil aus einem thermoplastischen Kunststoff wie PE (Polyethylen), PP (Polypropylen) etc. hergestellt. Bei der Dichtung handelt es sich meistens um eine solche aus einem elastomeren Kunststoff, wie beispielsweise EPDM (Ethylenpropylenkautschuk) oder auch SBR (Styrot-Butadien-Kautschuk). Jedenfalls können die fragliche Dichtung und das zugehörige Gehäuseteil oder die beiden Gehäuseteile gemeinsam in einem Zweikomponenten-Spritzgießvorgang aus den betreffenden und zuvor angegebenen Kunststoffen hergestellt werden. Dadurch wird eine kompakte und kostengünstige Bauweise zur Verfügung gestellt.

Darüber hinaus hat es sich bewährt, wenn das Lagerteil als Bestandteil des Gehäuses für die Getriebeanordnung ergänzend mit einer Aufnahme für den Aktuator ausgerüstet ist. Dabei wird meistens so vorgegangen, dass die Aufnahme gegenüber dem Aktuator abgedichtet ist. Eine vergleichbare Abdichtung wird im Bereich des Stellelementes bzw. Verriegelungszapfens beobachtet, so dass insgesamt eine gegenüber Umwelteinflüssen abgedichtete Baugruppe aus dem Stellelement, dem Übertragungselement bzw. der Getriebeanordnung respektive dem die Getriebeanordnung aufnehmenden Gehäuse und schließlich dem Aktuator vorliegt. Diese abgedichtete Baugruppe kann als kompaktes Einbaumodul komplett in eine Energieversorgungseinheit bzw. Stromtankstelle eingesetzt und mit der dort zumeist vorhandenen Steckdose mechanisch verbunden werden. Dazu ist das Gehäuse zur Aufnahme der Getriebeanordnung an die Steckdose angeschlossen.

Im Ergebnis wird eine elektrische Steckverbindung im Rahmen der Erfindung zur Verfügung gestellt, die kompakt und preiswert aufgebaut ist und zugleich über eine gegenüber dem Stand der Technik gesteigerte Funktionssicherheit verfügt. Tatsächlich können insbesondere lineare Stellbewegungen des Antriebszapfens ausgangsseitig des Aktuators unschwer in entsprechende Linearbewegungen des Stellelementes in anderer Richtung, meistens rechtwinklig hierzu, umgewandelt werden. Etwaige Biegeradien oder andere Einbaubeschränkungen müssen nicht beachtet werden.

Hinzu kommt, dass der Aktuator unmittelbar an das Gehäuse zur Aufnahme der Getriebenanordnung angeflanscht ist, so dass die auf diese Weise realisierte und abgedichtete Baugruppe aus dem Stellelement, der Getriebeanordnung inklusive aufnehmendem Gehäuse und schließlich dem Aktuator besonders kleinbauend umgesetzt werden kann. Die insgesamt abgedichtete Ausführungsform ermöglicht darüber hinaus einen unmittelbaren Einsatz in Verbindung mit einer Steckdose bei einer Stromtankstelle bzw. allgemein einer Energieversorgungseinheit. Dabei ist es sogar noch nicht einmal erforderlich, dass die fragliche Baugruppe separat in einem Gehäuse aufgenommen wird. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: die erfindungsgemäße elektrische Steckverbindung in einer Übersicht,
- Fig. 2: eine Detailansicht der Getriebeanordnung mit teilweise geöffnetern Gehäuse und
- Fig. 3A und 3B: den Gegenstand nach Fig. 2 in unterschiedlichen Funktionsstellungen, und zwar Fig. 3A die Verriegelungseinheit in ihrer Stellung "entriegelt" und Fig. 3B die Verriegelungseinheit in ihrer Position "verriegelt".

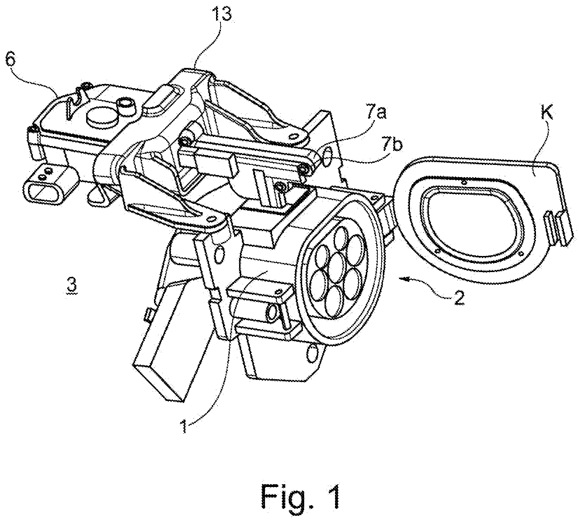

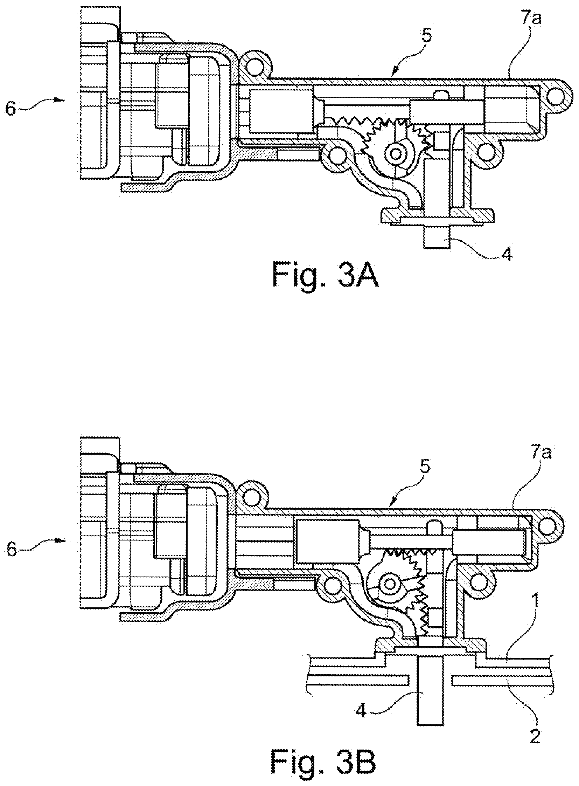

In den Figuren ist eine elektrische Steckverbindung dargestellt, die insbesondere für die elektrische Energieversorgung von Akkumulatoren in Elektrofahrzeugen genutzt wird. Zu diesem Zweck verfügt die elektrische Steckverbindung über einen Steckverbinder 1, 2 aus im Wesentlichen einer Steckdose 1 und einem Stecker 2. Der Stecker 2 ist lediglich in der Fig. 3B schematisch angedeutet und wird in die Steckdose 1 entsprechend der Pfeilrichtung in Fig. 1 eingesteckt. Dazu muss zunächst eine die Steckdose 1 außenseitig verschließende Klappe K gegen Federkraft geöffnet werden.

Die Steckdose 1 wird insgesamt in einer Energieversorgungseinheit bzw. Stromtankstelle 3 aufgenommen. Das deutet die Fig. 1 an. Darüber hinaus ist eine Verriegelungseinheit 4, 5 realisiert. Die Verriegelungseinheit 4, 5 setzt sich im Wesentlichen aus einem Sperrelement 4 und einem Übertragungselement 5 zur lösbaren Kopplung bzw. lösbaren Verriegelung von Steckdose 1 und Stecker 2 zusammen. Zusätzlich ist ein Aktuator 6 dargestellt, welcher zum Betätigen des Übertragungselementes 5 mit dem daran endseitig angeordneten Sperrelement 4 dient.

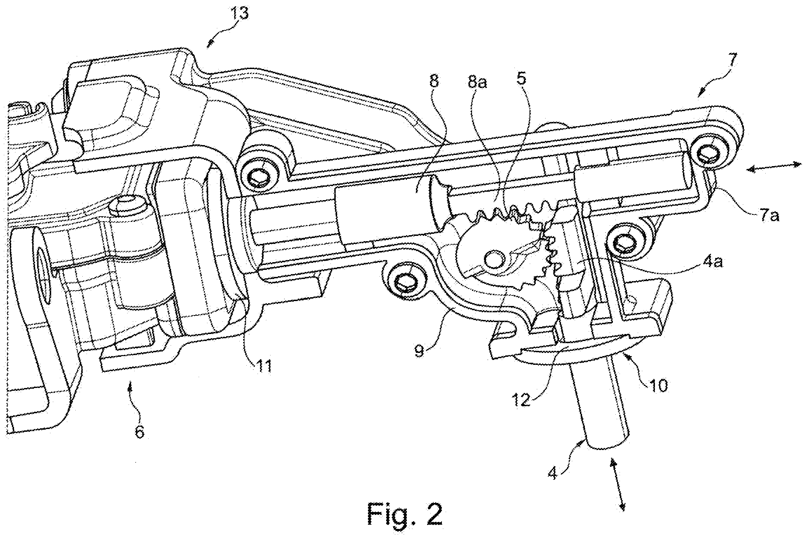

Im Rahmen des Ausführungsbeispiels ist das Übertragungselement 5 als Getriebeanordnung 5 ausgebildet. Bei diesem gezeigten Beispiel handelt es sich bei der Getriebeanordnung 5 um ein Umlenkgetriebe 5, welches man am besten anhand der Fig. 2 erkennen kann. Alternativ oder zusätzlich hierzu mag das Umlenkgetriebe 5 auch als Übersetzungs-/Untersetzungsgetriebe fungieren, was im dargestellten Beispielfall jedoch nicht realisiert ist. Denn dort lässt sich das Übertragungselement 5 bzw. die Getriebeanordnung 5 letztendlich auf ein Zahnrad 5 zurückführen.

Das Zahnrad 5 bzw. die Getriebeanordnung 5 ist in einem Gehäuse 7 gelagert. Das gilt auch für einen Antriebszapfen 8 sowie das Stellelement 4, das vorliegend als Verriegelungszapfen 4 ausgebildet ist. Der Antriebszapfen 8 wird von dem Aktuator 6 beaufschlagt und vollführt in der Fig. 2 durch einen Doppelpfeil angedeutete Linearbewegungen. Diese Linearbewegungen des Antriebszapfens 8 werden mit Hilfe der Getriebeanordnung 5 in Linearbewegungen des Stellelementes bzw. Verriegelungszapfens 4 umgewandelt. Dabei findet eine rechtwinklige Richtungsänderung statt, wie man unmittelbar anhand der Fig. 2 erkennt.

Tatsächlich sind der Antriebszapfen 8 einerseits und das Stellelement bzw. der Verriegelungszapfen 4 andererseits winklig, nach dem Ausführungsbeispiel rechtwinklig, zueinander angeordnet. Außerdem sorgt das bereits angesprochene Zahnrad 5 dafür, dass der Antriebszapfen 8 und das Stellelement bzw. der Verriegelungszapfen 4 hierdurch antriebstechnisch miteinander verbunden werden. Dazu ist das fragliche Zahnrad 5 in dem Gehäuse 7 auf einem zugehörigen Zapfen gelagert.

Sowohl der Antriebszapfen 8 als auch der Verriegelungszapfen bzw. das Stellelement 4 sind mit jeweils einem zugehörigen Zahnstangenabschnitt 8a, respektive 4a ausgerüstet. Das Zahnrad 5 kämmt mit beiden Zahnstangenabschnitten 4a, 8a. Zu diesem Zweck greift das Zahnrad 5 jeweils tangential in die rechtwinklig angeordneten Zahnstangenabschnitte 4a, 8a ein. Das hat zur Folge, dass eine Beaufschlagung des Antriebszapfens 8 in seiner Längserstreckung durch den Aktuator 6 dazu korrespondiert, dass der Antriebszapfen 8 in der Darstellung nach Fig. 2 entlang dem Doppelpfeil beispielsweise nach rechts bewegt wird.

Als Folge hiervon sorgt diese dadurch verursachte Uhrzeigersinndrehung des Zahnrades 5 dafür, dass das mit dem Zahnrad 5 kämmende Stellelement 4 über den Zahnstangenabschnitt 4a nach unten ausgefahren wird. Hierzu korrespondiert die in der Fig. 3B dargestellte Position "verriegelt" der Verriegelungseinheit 4, 5. Dagegen gehört die zurückgezogene Stellung des Stellelementes bzw. Verriegelungszapfens 4 gegenüber dem Gehäuse 7 zu der Position "entriegelt" der Verriegelungseinheit 4, 5, wie sie in der Fig. 3A dargestellt ist.

Das Gehäuse 7 setzt sich aus einem Lagerteil 7a und einem Abdeckteil 7b zusammen. Das Lagerteil 7a sorgt nicht nur für die Lagerung des Zahnrades 5, sondern auch dafür, dass sowohl der Antriebszapfen 8 als auch das Stellelement bzw. der Verriegelungszapfen 4 in dem fraglichen Gehäuse 7 respektive dem Lagerteil 7a geführt und aufgenommen werden. Um die beiden Gehäuseteile 7a, 7b gegeneinander abzudichten, ist zusätzlich eine Dichtung 9 realisiert. Das Lagerteil 7a und die Dichtung 9 definieren im Ausführungsbeispiel eine Zweikomponenten-Baueinheit 7a, 9 aus Kunststoff. Dazu mag das Lagerteil 7a aus einem thermoplastischen Kunststoff hergestellt sein, wohingegen es sich bei der Dichtung 9 um einen elastomeren Kunststoff handelt, wie in der Einleitung bereits beschrieben wurde.

Grundsätzlich kann auch das Abdeckteil 7b mit einer entsprechenden Dichtung 9 ausgerüstet werden. Das ist jedoch nicht dargestellt Zusätzlich zu der wenigstens einen Dichtung 9 zwischen den beiden Gehäuseteilen 7a, 7b sind im Ausführungsbeispiel noch ergänzende Dichtungen 10, 11 realisiert. Hierbei handelt es sich jeweils um Dichtungsringe 10, 11, mit deren Hilfe eine Führung 12 für das Stellelement bzw. den Verriegelungszapfen 4 im Gehäuse 7 einerseits abgedichtet wird. Andererseits sorgt die weitere Dichtung bzw. der Dichtungsring 11 dafür, dass der Aktuator 6 gegenüber dem Gehäuse 7 abgedichtet wird. Im Ausführungsbeispiel ist das Lagerteil 7a zu diesem Zweck mit einer Aufnahme 13 für den Aktuator 6 ausgerüstet Der in der Aufnahme 13 platzierte Aktuator 6 wird nun mit Hilfe der Dichtung 11 respektive des an dieser Stelle vorgesehenen Dichtungsringes 11 gegenüber dem Gehäuse 7 bzw. dem Abdeckteil 7b des Gehäuses 7 abgedichtet

Insgesamt formen der Aktuator 6, das Übertragungselement 5 bzw. die Getriebeanordnung 5 inklusive aufnehmendem Gehäuse 7 und schließlich das aus dem Gehäuse 7 auftauchende Stellelement respektive der Verriegelungszapfen 4 eine gegenüber Umwelteinflüssen abgedichtete Baugruppe 4, 5, 6, 7. Diese Baugruppe 4 bis 7 kann problemlos mit der Steckdose 1 mechanisch verbunden werden, wobei die Dichtung 10 bzw. der Dichtungsring 10 an dieser Stelle für eine zusätzliche Abdichtung der fraglichen Baugruppe 4 bis 7 gegenüber der Steckdose 1 respektive einem zugehörigen Gehäuse sorgt. Dadurch ist die Montage vereinfacht und werden reduzierte Kosten beobachtet.

## Patentansprüche

1. Elektrische Steckverbindung für insbesondere Elektrofahrzeuge, mit
• einem Steckverbinder (1, 2) aus Steckdose (1) und Stecker (2),
• einer Verriegelungseinheit (4, 5) mit wenigstens einem Sperrelement (4) und einem Übertragungselement (5) zur lösbaren Kopplung von Steckdose (1) und Stecker (2),
• einem Aktuator (6) zum Betätigen des Übertragungselementes (5),
wobei
• das Übertragungselement (5) als Zahnradanordnung (5) ausgebildet ist;
**dadurch gekennzeichnet, dass**
• die Zahnradanordnung (5) von einem Zahnstangenabschnitt (8a) des Antriebszapfens (8), der vom Aktuator (6) linear bewegt wird, angetrieben wird;
• das Sperrelement (4) an einem Ende als Verriegelungszapfen (4) ausgebildet ist und am anderen Ende einen Zahnstangenabschnitt (4a) aufweist, der in die Zahnradanordnung (5) greift und von dieser linear bewegt wird.

2. Steckverbindung nach Anspruch 1, **dadurch gekennzeichnet, dass**
• die Zahnradanordnung (5) als Umlenkgetriebe (5) und/oder Übersetzungs-/ Untersetzungsgetriebe ausgebildet ist.

3. Steckverbindung nach einem der vorigen Ansprüche, **dadurch gekennzeichnet, dass**
• der Antriebszapfen (8) und das Sperrelement (4) winklig, insbesondere rechtwinklig, zueinander angeordnet sind.

4. Steckverbindung nach einem der vorigen Ansprüche, **dadurch gekennzeichnet, dass**
• der Antriebszapfen (8) und das Sperrelement (4) durch wenigstens ein Zahnrad (5) antriebstechnisch miteinander verbunden sind.

5. Steckverbindung nach einem der vorigen Ansprüche, **dadurch gekennzeichnet, dass**
• die Zahnradanordnung (5) in einem Gehäuse (7) angeordnet ist.

6. Steckverbindung nach dem vorigen Anspruch, **dadurch gekennzeichnet, dass**
• sich das Gehäuse (7) aus einem Lagerteil (7a) und einem Abdeckteil (7b) zusammensetzt.

7. Steckverbindung nach einem der zwei vorigen Ansprüche, **dadurch gekennzeichnet, dass**
• wenigstens eine Dichtung (9) zwischen beiden Gehäuseteilen (7a, 7b) vorgesehen ist.

## Claims

1. Electrical plug-in connection in particular for electrical motor vehicles with a plug-in connector (1, 2) consisting of a socket (1) and a plug (2),
• a bolting unit (4, 5) with at least a blocking element (4) and a transmission element (5) for the detachable coupling of socket (1) and plug (2),
• an actuator (6) to activate the transmission element (5)
whereby
• the transmission element (5) is formed as a gearwheel arrangement (5); **characterized in that**
• the gearwheel arrangement (5) is driven by a gear rack section (8a) of the drive pin (8) which is moved in a linear manner by the actuator (6);
• the blocking element (4) is formed at one end as a bolting pin (4) and has a gear rack section (4a) at the other end which reaches into the gearwheel arrangement (5) and is moved by this in a linear manner.

2. Plug-in connection according to claim 1, **characterized in that**
• the gearwheel arrangement (5) is formed as an angle gear (5) and/or a step-up/ reduction gear.

3. Plug-in connection according to one of the previous claims, **characterized in that**
• the drive pin (8) and the blocking element (4) are arranged at an angle, in particular at a right angle, to one another.

4. Plug-in connection according to one of the previous claims, **characterized in that**
• the drive pin (8) and the blocking element (4) are connected to one another by at least one gearwheel (5) from a drive technology perspective.

5. Plug-in connection according to one of the previous claims, **characterized in that**
• the gearwheel arrangement (5) is arranged in a housing (7).

6. Plug-in connection according to the previous claim, **characterized in that**
• the housing (7) comprises a bearing section (7a) and a cover section (7b).

7. Plug-in connection according to one of the two previous claims, **characterized in that**
• at least one seal (9) is provided for between the two housing components (7a, 7b).

## Revendications

1. Liaison par enfichage électrique, en particulier pour des véhicules électriques comportant un élément de liaison par enfichage (1, 2) constitué d'une prise (1) et d'une fiche (2),
• une unité de verrouillage (4, 5) pourvue d'au moins un élément de blocage (4) et d'un élément de transmission (5) permettant l'accouplement libérable de la prise (1) et de la fiche (2),
• un actionneur (8) destiné à actionner l'élément de transmission (5),
• l'élément de blocage (4) formé en tant qu'élément de transmission (5)
**caractérisée en ce que**
• l'élément de transmission (5) est entraîné par une section à crémaillère (8a) de l'axe d'entraînement (8) qui est mû linéairement par l'actionneur (6),
• l'élément de blocage (4) est formé à une extrémité comme axe de verrouillage (4) et présente à l'autre extrémité une section à roue dentée (4a) qui s'engrène dans l'élément de transmission et qui est mû par ce dernier linéairement.

2. Liaison par enfichage selon la revendication 1 **caractérisée en ce que**
• l'élément de transmission (5) est formé comme engrenage de déviation (5) et/ou engrenage de transmission/réducteur de vitesse.

3. Liaison par enfichage selon l'une des revendications précédentes **caractérisée en ce que**
• l'axe d'entraînement (8) et l'élément de blocage (4) sont disposés de façon angulaire, en particulier perpendiculairement, l'un par rapport à l'autre.

4. Liaison par enfichage selon l'une des revendications précédentes **caractérisée en ce que**
• l'axe d'entraînement (8) et l'élément de blocage (4) sont reliés en technique d'entraînement l'un à l'autre par au moins une roue dentée (5)

5. Liaison par enfichage selon l'une des revendications précédentes **caractérisée en ce que**
• l'élément de transmission est disposé dans un boîtier (7).

6. Liaison par enfichage selon l'une des revendications précédentes **caractérisée en ce que**
• le boîtier (7) se compose d'un partie logement (7a) et d'une partie recouvrement (7b).

7. Liaison par enfichage selon l'une des revendications précédentes **caractérisée en ce que**
• au moins un joint (9) est prévu entre les deux parties du boîtier (7a, 7b).
